Europäisches Patentamt

European Patent Office

Office européen des brevets

(19)

(11) Numéro de publication : **0 577 455 A1**

(12) **DEMANDE DE BREVET EUROPEEN**

(21) Numéro de dépôt : **93401524.9**

(22) Date de dépôt : **14.06.93**

(51) Int. Cl.⁵ : **G01K 3/04**

(30) Priorité : **02.07.92 FR 9208175**

(43) Date de publication de la demande :
**05.01.94 Bulletin 94/01**

(84) Etats contractants désignés :
**AT BE CH DE DK ES GB GR IE IT LI LU MC NL PT SE**

(71) Demandeur : **S.A. MICROONDES ENERGIE SYSTEMES**
**2 et 4, avenue de la Cerisaie, Platanes 307**
**F-94266 Fresnes Cédex (FR)**

(71) Demandeur : **SOLUFRANCE**
**14, rue Soleillet**
**F-75020 Paris (FR)**

(72) Inventeur : **Germain, Alain**
**6, avenue Jean-Baptiste Fortin**
**F-92220 Bagneux (FR)**
Inventeur : **Berteaud, André-Jean**
**10, allée des Marronniers**
**F-91210 Draveil (FR)**
Inventeur : **Galtier, Francois**
**21, rue Bonaparte**
**F-75006 Paris (FR)**

(74) Mandataire : **Benech, Frédéric et al**
**Ernest Gutmann - Yves Plasseraud S.A. 3, rue Chauveau-Lagarde**
**F-75008 Paris (FR)**

(54) **Procédé et dispositif de contrôle du chauffage par micro-ondes d'un produit à une température et pendant un temps déterminé, support de marquage et récipient pour produit destiné à un tel contrôle.**

(57) Il s'agit d'un procédé de contrôle du chauffage par micro-ondes d'un produit à une température supérieure ou égale à une température déterminée pendant un temps supérieur ou égal à un temps déterminé, d'un support de marquage et d'un récipient pour produit destiné à un tel contrôle. On mesure la résistivité d'une encre thermo-réticulable (12, 22) chargée de particules conductrices avec laquelle on a marqué préalablement le produit, ou le récipient (11) contenant ledit produit, et dont la résistivité est agencée pour diminuer en relation avec la température et le temps de chauffage par micro-ondes de façon prédéterminée. L'invention est notamment applicable au contrôle de la stérilisation d'un produit pharmaceutique ou agro-alimentaire.

FIG. 3

EP 0 577 455 A1

La présente invention concerne un procédé et un dispositif de contrôle du chauffage par micro-ondes d'un produit à une température supérieure ou égale à une température déterminée pendant un temps supérieur ou égal à un temps déterminé, un support de marquage et un récipient pour un produit destiné à un tel contrôle.

Elle trouve une application particulièrement importante bien que non exclusive dans le domaine du contrôle de la stérilisation d'un produit, par exemple d'un soluté injectable à l'animal ou à l'homme.

On connaît actuellement des procédés de stérilisation de produit par lot, en autoclave.

Une telle stérilisation s'effectue sous pression, par exemple 3 bar, et consiste à porter à de l'ordre de 120°C pendant 10 à 30 minutes les récipients contenant le produit à stériliser.

De tels procédés présentent des inconvénients. Ils ne permettent pas un fonctionnement aisé en continu. Une fois les produits stérilisés, puis acheminés vers leurs destinations, aucun contrôle ultérieur ne peut être effectué, en cas de doute sur la stérilisation desdits produits.

La présente invention vise à fournir un procédé, un dispositif, un support de marquage et un récipient pour produit à contrôler répondant mieux que ceux antérieurement connus aux exigences de la pratique, notamment en ce qu'elle permet un véritable contrôle dosimétrique prouvant que le produit a été porté à une température dépassant une température seuil déterminée, par exemple de l'ordre de 120°C, pendant un temps supérieur à un temps seuil déterminé, par exemple vingt minutes, et ce de façon extrêmement aisée ; le contrôle peut être effectué à tout moment par un opérateur non spécialement qualifié, à l'aide d'un simple ohmmètre.

Pour ce faire, l'invention part de l'idée d'utiliser l'énergie micro-ondes, d'une part pour chauffer rapidement et de façon homogène le produit, et d'autre part pour faire varier la conductivité d'une encre thermo-réticulable avec laquelle on a préalablement marqué le produit ou le récipient contenant le produit à chauffer.

Les inventeurs ont en effet eu l'idée d'utiliser le processus de réticulation sous micro-ondes d'encres du type polymère, chargées de particules conductrices comme des poudres ou fibres métalliques tels que l'argent, le cuivre, le fer, le manganèse, le ruthénium, le réhénium, le rhodium, le nickel, l'aluminium, ou comme le noir de carbone, en transformant un produit isolant en produit conducteur, pour lui faire jouer un rôle de dosimètre, afin de contrôler la stérilisation d'un produit, et notamment d'un soluté injectable.

Dans ce but l'invention propose essentiellement un procédé de contrôle du chauffage par micro-ondes d'un produit à une température supérieure ou égale à une température déterminée pendant un temps supérieur ou égal à un temps déterminé, dans lequel on mesure la résistivité d'une encre thermo-réticulable chargée de particules conductrices avec laquelle on a marqué préalablement le produit, ou le récipient contenant ledit produit, et dont la résistivité est agencée pour diminuer en relation avec la température et le temps de chauffage par micro-ondes de façon prédéterminée, de façon à ce que la mesure de ladite résistivité après chauffage permette de vérifier le chauffage dudit produit à ladite température supérieure ou égale à la température déterminée pendant ledit temps supérieur ou égal au temps déterminé.

Dans des modes de réalisation avantageux on a de plus recours à l'une et/ou à l'autre des dispositions suivantes :

- le procédé comprend l'étape de marquage préalable du produit ou de son récipient, ledit marquage consistant à fixer sur le produit ou son support une pastille de support diélectrique sur la face supérieure duquel l'encre thermo-réticulable a été déposée ;
- le produit à contrôler étant contenu dans un récipient, l'étape préalable de marquage consiste à marquer directement le récipient avec une couche de ladite encre thermo-réticulable par sérigraphie.

L'invention propose également un support de marquage pour contrôle du chauffage par micro-ondes d'un produit à une température supérieure ou égale à une température déterminée, pendant un temps supérieur ou égal à un temps déterminé, ledit support de marquage comprenant une pastille support constituée par un matériau diélectrique dont une face comporte un matériau absorbant et est propre à être fixée sur ledit produit ou sur un récipient propre à contenir ledit produit et dont l'autre face est munie d'une couche d'encre thermo-réticulable, chargée de particules conductrices, la résistivité de ladite encre étant agencée pour diminuer en relation avec la température et le temps de chauffage par micro-ondes de façon prédéterminée, de sorte que la mesure de la dite résistivité après chauffage permette de vérifier le chauffage dudit produit à ladite température supérieure ou égale à la température déterminée pendant ledit temps supérieur ou égal au temps déterminé.

Par matériau absorbant, il faut entendre tout matériau conducteur de l'électricité tel que les métaux ou un produit carboné, disposé en couche mince (10 à 100 $\mu$m.

Dans un autre mode de réalisation avantageux, la pastille de support de marquage ne comporte pas de matériau absorbant sur sa face encollée avec le produit ou le récipient propre à le contenir, le produit lui-même jouant alors le rôle du matériau absorbant, ce qui peut être le cas lorsqu'il s'agit notamment d'un liquide.

De tels supports peuvent être fabriqués indépendamment des produits dont ils permettront le contrôle ultérieur.

Avantageusement le support de marquage est constitué par le récipient lui-même qui comporte une enceinte de rétention dudit produit, ladite enceinte étant directement marquée extérieurement par l'encre thermo-réticulable.

L'invention propose également un récipient pour produit destiné à être stérilisé ou pasteurisé par chauffage par micro-ondes, ledit récipient comportant une enceinte de rétention dudit produit marquée extérieurement directement, ou indirectement sur un support intermédiaire, par une encre thermo-réticulable chargée de particules conductrices, la résistivité de ladite encre étant agencée pour diminuer en relation avec la température et le temps de chauffage par micro-ondes de façon prédéterminée, de sorte que la mesure de ladite résistivité après chauffage permette de vérifier la stérilisation ou pasteurisation dudit produit chargée de particules conductrices, la résistivité de ladite encre étant agencée pour diminuer en relation avec la température et le temps de chauffage par micro-ondes de façon prédéterminée, de sorte que la mesure de la dite résistivité après chauffage permette de vérifier la stérilisation dudit produit placé dans ladite enceinte.

Avantageusement, le produit ne peut être dissocié de son emballage sans que cela ne soit détectable.

Le récipient est en effet et par exemple conçu comme inviolable, c'est-à-dire qu'on ne peut l'ouvrir sans qu'une telle ouverture ne soit détectable.

Dans un mode de réalisation avantageux, le produit est constitué par un soluté injectable à l'homme ou à l'animal, ou encore est un produit agro-alimentaire.

Par produit agro-alimentaire, il faut notamment et par exemple entendre un produit du type plat cuisiné, mais aussi légumes frais etc.

Le récipient peut par exemple être prévu en verre, la densité de puissance micro-ondes mise en jeu pour stériliser étant de 70 w/dm$_3$. Dans un autre mode de réalisation, le récipient est en matière plastique et comprend une double enveloppe en contact intime avec le récipient contenant le produit, pour assurer une bonne conduction thermique.

Avantageusement l'encre conductrice est à base de résol phénolique plastifié exempt de solvant additionné de butyl carbitol pour faciliter la sérigraphie.

L'invention propose également un dispositif de mise en oeuvre du procédé de contrôle du chauffage de produit ci-dessus décrit.

L'invention sera mieux comprise à la lecture de la description qui suit de plusieurs exemples de réalisation, appliqués à la stérilisation de soluté et donnés de façon non limitative.

La description se réfère aux dessins qui l'accompagnent dans lesquels :

- La figure 1 donne les étapes du procédé ou les éléments d'un dispositif mettant en oeuvre ledit procédé, selon un mode de réalisation de l'invention.
- La figure 2 montre un récipient de soluté marqué par sérigraphie pour contrôle selon l'invention.
- La figure 3 montre un support amovible pour marquage de produit, par exemple du type agro-alimentaire, selon l'invention.
- Les figures 4 à 7 sont des graphes montrant respectivement l'évolution de la résistance de quatre encres différentes (A, B, C et D) applicables à l'invention, en fonction du temps de chauffage à une température supérieure à de l'ordre de 120°C.

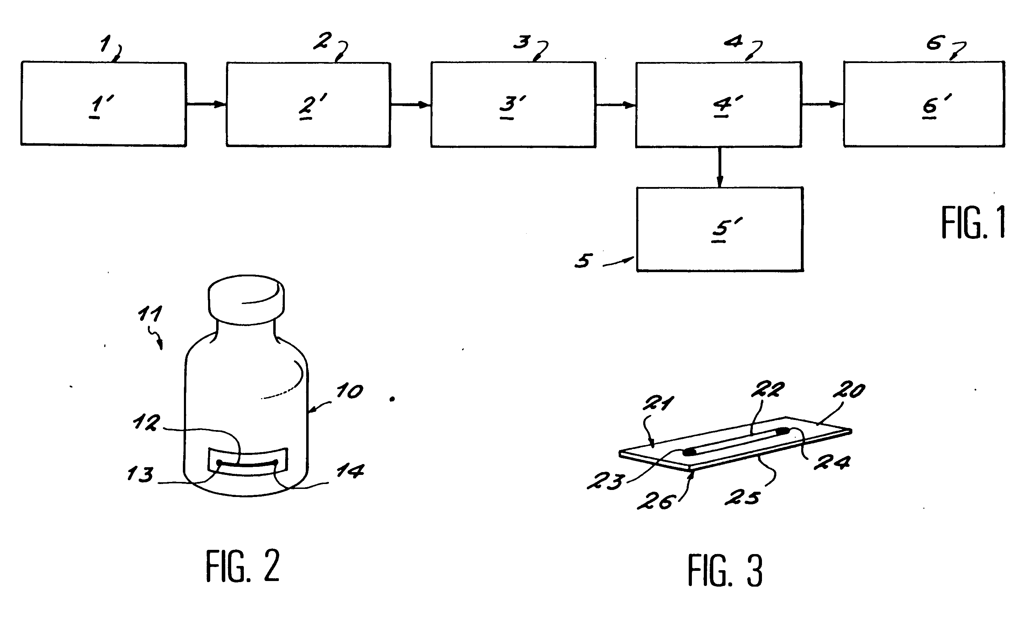

La figure 1 montre schématiquement les étapes d'un procédé, ou les unités d'un dispositif mettant en oeuvre le procédé, selon le mode de réalisation de l'invention plus particulièrement décrit ici appliqué à la stérilisation de flacons en verre de soluté injectable.

Le procédé est également applicable à des solutés placés dans des pochettes plastiques à deux parois superposées, l'une correspondant au récipient proprement dit contenant le soluté, et l'autre à un sur-emballage de protection. Les deux enveloppes sont maintenues en contact intime l'une avec l'autre, pour permettre une bonne transmission de la chaleur par conduction entre soluté et paroi externe de la pochette.

Une telle pochette à double enveloppe s'obtient de façon connue en elle-même, en utilisant par exemple une technique de mise sous vide.

La première étape 1 est une étape de remplissage qui permet un remplissage en automatique des flacons un par un, ou par rangée de plusieurs flacons, avec le soluté à stériliser dans une unité de remplissage 1'.

Il s'agit par exemple d'un soluté du type glucose à 5%.

Chaque récipient est ensuite acheminé, avec ou sans stockage intermédiaire, vers l'unité 2' de marquage, pour une étape de marquage, qui consiste à marquer les récipients par sérigraphie de façon connue en elle-même, avec un film d'encre thermo-réticulable.

Pour ce faire, on dépose (voir figure 2) sur la paroi externe 10 du récipient 11 une couche ou trait d'encre 12 de faible épaisseur, de l'ordre de 20 $\mu$m, par exemple sur une longueur d'un centimètre et une largeur de l'ordre du millimètre, entre deux plots 13 et 14 qui serviront de points de contact avec l'instrument de contrôle (ohmmètre), lors d'une mesure.

Les deux plots sont par exemple et plus simplement les extrémités de la couche d'encre.

La composition de l'encre est par exemple celle décrite ci-après sous la dénomination encre D.

Les flacons remplis de soluté sont ensuite refermés de façon connue puis acheminés vers l'unité 3'de stérilisation par micro-ondes 3, en continu.

Cette unité comporte une cavité de traitement des produits en flacon pendant un temps déterminé de type connu.

L'enceinte est maintenue sous une pression de l'ordre de 3 bar pendant 12 minutes.

Avantageusement, la gamme de fréquence des micro-ondes utilisés est comprise entre environ 0,1 GHz et environ 100 GHz, de préférence entre environ 0,5 GHz et environ 30 GHz.

Une fois le traitement de stérilisation effectué, les flacons sont conduits à l'unité 4' de contrôle par mesure électrique 4 en automatique, de la résistance de la couche d'encre 12 entre les plots 13 et 14, par l'intermédiaire d'un ohmmètre.

Grâce à l'invention, un tel contrôle peut s'effectuer flacon par flacon, et non par échantillonnage comme dans l'art antérieur, avec tous les risques que cela comportait.

Les flacons non conformes sont rejetés automatiquement vers l'unité 5' de rejet 5.

Les flacons ayant passé le test de la stérilisation avec succès sont dirigés automatiquement vers une unité 6' de stockage 6 avant utilisation.

On a représenté sur la figure 3 un support selon l'invention comportant une pastille 20 en matériau diélectrique, par exemple en verre époxy d'épaisseurs variant entre 8 et 35 microns, dont la face 21 est munie d'une couche d'encre 22 thermo-réticulable selon l'invention déposée par sérigraphie avec deux plots conducteurs 23 et 24, d'épaisseur de l'ordre de 20 $\mu$m. L'autre face 25 comporte une couche de matériau absorbant 26 qui joue le rôle d'amortisseur, par exemple en carbone, et des moyens de fixation de ladite face 25 par exemple par collage, sur un récipient destiné au produit à contrôler, voire même directement sur le produit.

La couche 26 permet d'éviter l'échauffement intempestif de la couche d'encre.

Elle est calculée et élaborée en fonction du produit à traiter et des conditions à respecter d'une façon connue, à la portée de l'homme du métier.

Cette couche de matériau absorbant peut même ne pas être nécessaire, dans le cas où le produit lui-même assure le rôle d'amortisseur évitant l'échauffement.

On rappelle ici, pour mémoire et concernant les mesures de la résistivité d'un produit établi en plaque, que la caractéristique de conduction électrique d'une couche conductrice ou résistive déposée par sérigraphie peut s'exprimer en ohm par carré de surface d'une couche d'épaisseur constante (par exemple de 25 $\mu$m d'épaisseur), la résistance électrique d'un tel élément carré étant proportionnelle à la résistivité du matériau, quelle que soit la surface de la couche.

Cette caractéristique est classiquement utilisée par l'homme de l'art.

Il existe actuellement dans le domaine de l'électronique des encres de nature conductrice constituées d'un liant (par exemple un polymère thermoplastique ou thermodurcissable) et d'une charge (du type paillette d'argent) permettant de réaliser des circuits imprimés ou des claviers à plat conférant des qualités électriques propres au circuit recherché.

Rappelons qu'avant réticulation, l'encre chargée de particules électro-conductrices, est isolante alors qu'après réticulation, elle devient conductrice, sa conductivité électrique croissant quand le temps de réticulation augmente, pour atteindre une valeur limite.

L'idée de l'invention consiste notamment à appliquer la thermo-réticulation des encres pour valider la stérilisation ou la pasteurisation de produits pharmaceutiques ou agro-alimentaires.

Aucune encre actuellement connue n'est utilisable comme dosimètre de stérilisation.

En effet, on n'a jamais recherché jusqu'à présent d'encre dont la cinétique de réticulation corresponde à des temps et à des températures de stérilisation correcte de produits comme par exemple des solutés injectables.

L'un des mérites de l'invention est justement de proposer de telles encres et plus généralement de détailler la façon de les obtenir, encres dont la cinétique de réticulation est similaire à un cycle de stérilisation de produits sous micro-ondes, et par exemple de solutés injectables en flacons verre.

Il va de soi qu'en fonction de l'application recherchée, dépendant des paramètres suivants :

. produit à stériliser ou à chauffer,

. support utilisé,

. puissance des micro-ondes utilisées,

. température à atteindre,

. temps de maintien à ladite température,

. charge dans l'applicateur micro-ondes, l'homme du métier sera à même de déterminer la composition de l'encre à retenir.

Cependant, la notion d'achèvement de réticulation des encres à base de résine thermoplastique ou thermodurcissable résines époxidiques, alkydes mélamines ou acryliques mélamines est une donnée relative. En effet, quel que soit le mode de traitement (micro-onde ou thermique), il reste toujours des sites réactifs qui n'ont pas réagi et la réticulation peut donc évoluer en fonction du couple temps-température. En conséquence, les inventeurs ont été conduits à trouver le meilleur critère de bonne réticulation d'une encre.

Par voie thermique, l'expérience a montré qu'après 5 heures à 150°C, la résistivité moyenne du circuit se stabilise autour d'une valeur R, celle-ci pouvait ensuite diminuer de 0,1 R pour un traitement supplémentaire de 5 heures à 150°C.

Cette variation de 10% correspond également à la précision que l'on peut attendre d'une méthode d'impression par sérigraphie.

De façon pratique, les encres à tester sont donc ainsi étalonnées en étuve à 150°C pendant 5 heures.

On va maintenant décrire à titre d'exemple nullement limitatif la recherche d'encres thermo-réticulables et la détermination d'une encre optimisée, appliquée à la stérilisation de soluté injectable en flacons de verre.

## MISE EN OEUVRE DES ENCRES

Les encres ont été sérigraphiées manuellement au moyen d'un écran polyester de 140 mesh. Le véhicule test a été conçu spécialement pour être sérigraphié sur du ruban adhésif connu sous la dénomination de KAPTON, de largeur 19 mm. Ce véhicule test est représenté par un circuit de 100 □ de 1 mm de largeur pour mesure de résistivité.

Ce véhicule test est ensuite simplement contrecollé sur des flacons en verre de 1/2 litre remplis de soluté injectable.

## APPAREIL MICRO-ONDES

L'équipement micro-ondes mis en oeuvre comprend 4 tubes en verre résistant à la pression, par exemple en verre connu sous la dénomination "Pyrex", dans lesquels une pression de 2 à 3 bars peut être établie à l'aide d'un sas de compression et de décompression. Chaque tube comprend 5 applicateurs connus sous la dénomination STEREOMODE et fabriqués par la Société française M.E.S., alimentés chacun par un générateur de 800 watts.

Chaque applicateur peut recevoir 2 flacons de 1/2 litre. A chaque cycle de stérilisation, il est donc possible de traiter 10 flacons par tube.

Afin d'accélérer le refroidissement des flacons, l'appareil est muni d'une circulation d'air forcé avec échangeur thermique.

## RESULTATS EXPERIMENTAUX POUR DIVERSES ENCRES

### Encre A

Il s'agit d'une encre conductrice thermoplastique à base de polyester de haut poids moléculaire fabriqué par la société allemande HÜLS.

Comme pour toutes les résines thermoplastiques, la résistivité de l'encre diminue au fur et à mesure de l'évaporation des solvants pour atteindre une valeur limite qui se rapproche asymptotiquement de la résistivité de la résine chargée à l'argent.

Il s'agit donc de trouver l'équilibre de solvant permettant d'allier d'une part une bonne stabilité sur l'écran et d'autre part une cinétique d'évaporation cadrant avec le cycle de stérilisation.

Parmi les encres testées, l'encre à l'argent AG C31 de la société française Comptoir Lyon Alemand Louyot (CLAL) a été plus particulièrement étudiée (encre A).

La composition de l'encre A est la suivante :

```
70% paillettes Ag JV4 (diam. moyen des particules
      d'argent de l'ordre de 3μm)
30% liant polyester à 35% dans l'acétate de carbitol
    ────
100%
```

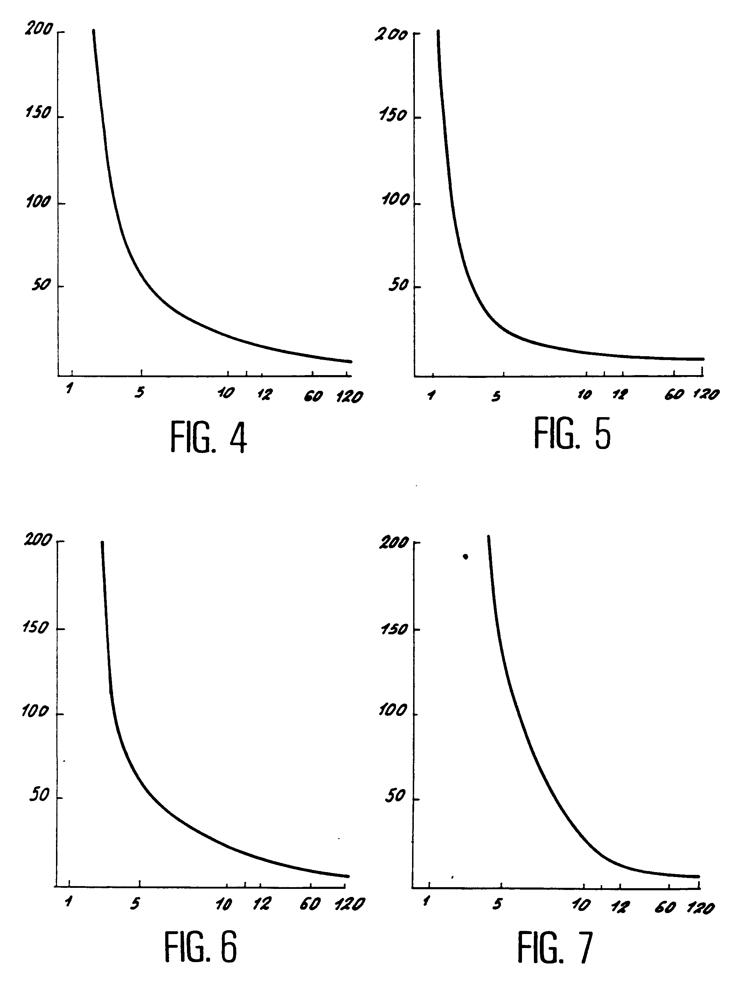

Expression des résultats de l'encre A (voir figure 4) :

| Temps mn | Résistivité du circuit en Ω |
|---|---|
| 2 | 188 |
| 4 | 66 |
| 5 | 48 |
| 6 | 39 |
| 7 | 32 |
| 8 | 30 |
| 9 | 24 |
| 10 | 23 |
| 11 | 18 |
| 12 | 17 |
| + 30mn à l'étuve 150° | 13 |
| + 60mn à l'étuve 150°[*] | 11 |

Nota[*]   De façon pratique, un traitement supplémentaire de 1 h en étuve à 150°C correspond au traitement thermique de la même encre à l'étuve pendant 5 heures à une température de 150°C.

Encre B

Afin d'obtenir une meilleure réactivité sous micro-ondes, des liants à base de résines polyester hydrosolubles ont ensuite été utilisés.

Ces résines directement solubles dans l'eau sans amine de neutralisation, sont alors apparues comme offrant un intérêt majeur pour la réactivité sous micro-ondes.

Par exemple, le produit connu sous la dénomination Hydrorob 101100 de la Société ROBBE a été avantageusement utilisé.

Ses caractéristiques sont les suivantes :

Extrait sec          80% ± 1%
Solvant              Butyl glycol
Indice d'hydroxyle   280 - 320

Différents liants ont été étudiés à partir de cette résine, l'un comprenant une certaine proportion d'eau, l'autre sans présence d'eau ne comportant que des solvants à haute polarité. Comme solvant de base, le butyl glycol d'indice d'évaporation 163 a été finalement choisi. Le butyl di glycol d'indice d'évaporation plus élevé a été retenu comme solvant de tension.

| Liant 1 | | Encre B N°1 |
|---|---|---|
| Polyester hydrosoluble 80% | 25 | 75% Argent JV7 |
| Résine urée formol méthylée | 60 | 20% liant 1 |
| Butyldiglycol | 5 | 5% Butylglycol |
| Eau | 5 | 100% |
| Butyl glycol | 4,5 | |
| Catalyseur PTSA bloqué | 0,5 | |
| | 100% | |

| Liant 2 | | Encre B N°2 |
|---|---|---|
| Polyester hydrosoluble 80% | 25 | 75% Argent JV7 |
| Résine urée formol méthylée | 60 | 21 % liant 2 |
| Butyldiglycol | 5 | 2% Butylglycol |
| Butyl glycol | 9,5 | 2% Butyldiglycol |
| Catalyseur PTSA bloqué | 0,5 | 100% |
| | 100% | |

La difficulté de conservation des encres à base de résines (polyester hydrosolubles/résines aminées/catalyses par du PTSA bloqué) nécessite de maintenir ces encres à des températures de l'ordre de 10°C maximum. Pour contourner cette difficulté, les inventeurs ont été conduits à utiliser des résines aminées beaucoup plus réactives, ce qui a abouti à l'encre B N°3.

| Liant 3 | Encre B N°3 |
|---|---|
| 15 Hydrorob 101100 | 75% Argent paillette JV7 |
| 40 HMM 066 (BASF) | 21% liant 3 |
| 18 Butyldiglycol | 2% Butyl glycol |
| 18 Butyl glycol | 1,9%Acétate de éthyl glycol |
| 8 Acétate d'éthyl glycol | 0,1%Byk 052 (antibulle) |
| 100% | 100% |

EP 0 577 455 A1

Expression des résultats de l'encre B (voir figure 5) :

| Temps mn | Résistivité du circuit en $\Omega$ |
|---|---|
| 1 | 250 |
| 2 | 111 |
| 3 | 43 |
| 4 | 25 |
| 5 | 18 |
| 6 | 16 |
| 7 | 16 |
| 8 | 15 |
| 9 | 13 |
| 10 | 13 |
| 11 | 12 |
| 12 | 10 |
| + 30mn à l'étuve 150° | 9 |
| + 60mn à l'étuve 150° | 9 |

Bien que globalement satisfaisante, l'encre B présente cependant l'inconvénient d'un indice d'hydroxyle de la résine très élevé de l'ordre de 300 ; il est donc nécessaire d'utiliser une proportion importante d'aminoplaste nécessaire à la réticulation, d'où un risque de perte de souplesse du film.

Encre C

L'encre C est une encre à base de résine acrylique thermodurcissable (réf. Plexisol DV 606 de la société allemande RÖHM).

| Liant 4 | | Encre C |
|---|---|---|
| Plexisol DV 606 | 68 | 70% Argent XRP 5 |
| Résine mélamine méthylée de forte réactivité | 10 | 30% Liant 4 |
| Butyl glycol | 9 | 100% |
| Acétate de butyl carbitol | 9 | |
| Butyldiglycol | 4 | |
| | 100% | |

Expression des résultats de l'encre C (voir figure 6) :

| Temps mn | Résistivité du circuit Ω |
|---|---|
| 3 | 169 |
| 4 | 73 |
| 5 | 56 |
| 6 | 49 |
| 7 | 40 |
| 8 | 35 |
| 9 | 30 |
| 10 | 23 |
| 11 | 18 |
| 12 | 15 |
| + 30mn à l'étuve 150° | 10 |
| + 60mn à l'étuve 150° | 9 |

Encre D

L'encre D est une encre conductrice (réf. VF 53 du CLAL) à base d'imprenal 31A de la société RASHIG. L'imprenal 31A est un résol phénolique plastifié exempt de solvant.
Les films présentent après cuisson une forte résistance aux produits chimiques, aux solvants, aux acides, aux bases ainsi qu'aux agents oxydants.
L'encre D est compatible avec les époxy, les résines vinyliques, acryliques aminoplaste polyester.

Composition de l'encre D

| | |
|---|---|
| 63% | Argent JV5 (en Paillettes) |
| 17,3% | Imprenal 31A |
| 6,5% | Butyl carbitol |
| 13,2% | Methyl cyclohexanol |
| 100% | |

La mouillabilité de la charge pigmentaire est cependant moyenne et conduit à une rhéologie imparfaite de l'encre, l'aspect des dépôts étant irrégulier.
Une addition de butyl carbitol permet de rendre l'encre sérigraphiable avec une bonne reproductibilité.

Expression des résultats de l'encre D (voir figure 7)

| Temps mn | Résistivité du circuit en $\Omega$ |
|---|---|
| 4 | 231,5 |
| 5 | 131,8 |
| 6 | 90,5 |
| 7 | 67,3 |
| 8 | 51,7 |
| 9 | 39,1 |
| 10 | 28,2 |
| 11 | 16,0 |
| 12 | 11,2 |
| + 30mn à l'étuve 150° | 9,6 |
| + 60mn à l'étuve 150° | 8,7 |

## INTERPRETATION DES RESULTATS

Les inventeurs ont ensuite ramené la possibilité d'exploitation finale de ces résultats à deux paramètres :
- d'une part, le changement de pente de la courbe de conductivité en fonction du temps de traitement micro-ondes. La sensibilité de la méthode sera en effet d'autant plus élevée que le changement de pente est fort au voisinage de la fin du cycle de traitement micro-ondes (12 minutes pour une puissance de 800 W et des flacons de 1/2 litre dans l'exemple plus particulièrement décrit ici) ;
- d'autre part, la stabilité de la courbe de conductivité après la fin de cycle, pour permettre des contrôles de stérilisation à long terme.

L'un des mérites des inventeurs a été de décider du choix des encres à partir de leur courbe de réticulation en étant guidé par l'optimisation de ces 2 paramètres.

Il va de soi que cette méthode plus particulièrement décrite dans le cadre de la stérilisation de flacons de soluté, est bien entendu applicable de façon similaire, à la recherche et à l'optimisation de l'encre thermo-réticulable qui serait destinée au chauffage d'un autre produit et/ou un autre récipient.

De façon à permettre de comparer les résultats entre les encres, il est établi le tableau suivant :

| | Encre A | Encre B | Encre C | Encre D |
|---|---|---|---|---|
| R ($\Omega$) | 18,5 | 12,1 | 18,26 | 16,02 |
| R' ($\Omega$) | 17,5 | 10,4 | 15,5 | 11,2 |
| R" ($\Omega$) | 11 | 9,0 | 9,3 | 8,7 |
| $\Delta_1$ | -5,4 | -14,0 | -14,8 | -30,0 |
| $\Delta_2$ | -37,1 | -13,5 | -40,0 | -22,3 |

avec :

R : résistance de l'encre en $\Omega$ après 11 minutes sous micro-ondes ;

R' : résistance de l'encre en $\Omega$ après un cycle de stérilisation de 12 minutes ;

R" : résistance de l'encre en $\Omega$ après un deuxième cycle de stérilisation de 12 minutes.

$$\Delta_1 = \frac{R' - R}{R} \times 100$$

et

$$\Delta_2 = \frac{R" - R'}{R'} \times 100$$

Compte tenu de ce qui a été dit précédemment, l'encre dosimètre optimum doit donner un maximum de variation de sa résistivité entre 11 et 12 minutes (correspondant au temps de stérilisation), et donner des variations de sa résistivité après fin de cycle aussi faibles que possible, par exemple inférieur à 10 ou 20%.

On constate donc à partir du tableau ci-dessus, que l'encre D remplit le mieux les conditions déterminées par les inventeurs, puisqu'elle présente une variation de l'ordre de 30% entre 11 et 12 minutes et que la variation de résistivité dans le temps est de l'ordre de 20%.

La cinétique de réticulation de l'encre D constitue donc un bon compromis entre une variation suffisamment rapide en fin de cycle de stérilisation et une stabilité correcte après la fin de cycle, comme cela ressort d'ailleurs de l'examen de la figure 7, comparée aux figures 4 à 6.

Notons cependant que les encres A, B et C, bien que moins optimisées pour la présente application, présentent également des résultats acceptables, permettant de répondre aux critères de l'invention.

Ce choix d'encre permet donc :
- les vérifications immédiates d'une bonne stérilisation du flacon par mesure de la résistance électrique du circuit test dès la fin de la stérilisation ;
- les vérifications ultérieures et notamment à très long terme, de la stérilisation du flacon quel que soit son emplacement géographique, dans la mesure où une valeur de résistance inférieure à 20 Ω est impossible à obtenir sans que le flacon n'ait été traité par micro-ondes dans les conditions convenables.

La formulation de l'encre choisie demande cependant obligatoirement de prendre en compte les paramètres suivants :

1) La stérilisation doit être faite par micro-ondes et non par de la vapeur ou un autre moyen thermique.

2) Le flacon doit être plein de soluté (quelle que soit sa nature) car la cinétique serait différente avec un flacon vide.

3) La nature du conteneur est importante. La formulation faite pour un flacon verre doit donc être plus ou moins adaptée pour un emballage en poche plastique par exemple.

4) La vitesse de stérilisation est fonction de la densité de puissance micro-onde mise en jeu. L'emploi de générateurs de 2 Kw au lieu de 0,8 Kw conduirait donc à une reformulation de l'encre, afin de réajuster les cinétiques de réticulation et de stérilisation.

De tels ajustements sont à la portée de l'homme du métier utilisant notamment la méthode d'optimisation mise au point par les inventeurs.

Encore une fois, l'un des avantages principaux d'un procédé selon l'invention est de permettre le contrôle individuel et en continu, de l'état de stérilisation des produits par mesure d'une résistance électrique, avec possibilité de rejet automatique des flacons douteux en sortie de traitement, par exemple.

Il permet également un second contrôle sur site par ohmmètre, juste avant l'emploi du flacon notamment, ce qui est très sécurisant pour l'utilisateur.

**Revendications**

1. Procédé de contrôle du chauffage par micro-ondes d'un produit à une température supérieure ou égale à une température déterminée pendant un temps supérieur ou égal à un temps déterminé, dans lequel on mesure la résistivité d'une encre thermo-réticulable (12, 22) chargée de particules conductrices avec laquelle on a marqué préalablement le produit, ou le récipient (11) contenant ledit produit, et dont la résistivité est agencée pour diminuer en relation avec la température et le temps de chauffage par micro-ondes de façon prédéterminée, de façon à ce que la mesure de la dite résistivité après chauffage permette de vérifier le chauffage dudit produit à ladite température supérieure ou égale à la température déterminée pendant ledit temps supérieur ou égal au temps déterminé.

2. Procédé de contrôle selon la revendication 1, caractérisé en ce que il comprend de plus l'étape de marquage préalable du produit ou de son récipient, ledit marquage consistant à fixer sur le produit ou son support une pastille (20) de support diélectrique sur la face supérieure duquel l'encre thermo-réticulable (22) a été déposée.

3. Procédé de contrôle selon la revendication 1, caractérisé en ce que le produit à contrôler étant contenu dans un récipient, l'étape préalable de marquage (1) consiste à marquer directement le récipient avec une couche (12) de ladite encre thermo-réticulable par sérigraphie.

4. Application du procédé de contrôle selon l'une quelconque des revendications précédentes au contrôle de la stérilisation dudit produit.

5. Application du procédé, selon la revendication 4, au contrôle de la stérilisation d'un soluté injectable à un animal ou à l'homme.

6. Application du procédé selon l'une quelconque des revendications 1 à 4 au contrôle de la stérilisation ou de la pasteurisation d'un produit agro-alimentaire.

7. Support de marquage pour contrôle du chauffage par micro-ondes d'un produit à une température supérieure ou égale à une température déterminée, pendant un temps supérieur ou égal à un temps déterminé, caractérisé en ce qu'il comprend une pastille support (20) constituée par un matériau diélectrique dont une face (25) est propre à être fixée sur ledit produit directement ou indirectement ou sur un récipient propre à contenir ledit produit, et dont l'autre face est munie d'une couche (22) d'encre thermo-réticulable, chargée de particules conductrices, la résistivité de ladite encre étant agencée pour diminuer en relation avec la température et le temps de chauffage par micro-ondes de façon prédéterminée, de sorte que la mesure de la dite résistivité aprés chauffage permette de vérifier le chauffage dudit produit à ladite température supérieure ou égale à la température déterminée pendant ledit temps supérieur ou égal au temps déterminé.

8. Support de marquage selon la revendication 7, caractérisé en ce que la face (25) propre à être fixée sur ledit produit ou sur un récipient propre à contenir directement ou indirectement ledit produit comporte un matériau absorbant.

9. Support selon l'une quelconque des revendications 7 et 8, caractérisé en ce que l'encre conductrice est à base de résol phénolique plastifié exempt de solvant, additionné de butyl carbitol pour faciliter la sérigraphie.

10. Récipient (11) pour produit destiné à être stérilisé ou pasteurisé par chauffage par micro-ondes, caractérisé en ce qu'il comporte une enceinte (10) de rétention dudit produit marquée extérieurement directement, ou indirectement sur un support intermédiaire, par une encre (12) thermo-réticulable, chargée de particules conductrices, la résistivité de ladite encre étant agencée pour diminuer en relation avec la température et le temps de chauffage par micro-ondes de façon prédéterminée, de sorte que la mesure de ladite résistivité après chauffage permette de vérifier la stérilisation ou pasteurisation dudit produit.

11. Application du récipient selon la revendication 10 à un produit constitué par un soluté injectable à l'animal ou à l'homme.

12. Application du récipient selon la revendication 10 à un produit agro-alimentaire.

FIG. 1

FIG. 2

FIG. 3

FIG. 4

FIG. 5

FIG. 6

FIG. 7

Office européen
des brevets

**RAPPORT DE RECHERCHE EUROPEENNE**

Numero de la demande

EP     93 40 1524

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 054 831 (OLYMPIA WERKE) 30 Juin 1982 * page 10, alinéa 1 - page 12, alinéa 1 * --- | 1,2 | G01K3/04 |
| A | FR-A-2 269 967 (BAXTER) 5 Décembre 1975 * le document en entier * --- | 4-6 | |
| A | FR-A-1 292 900 (THOMSON-HOUSTON) 1962 * le document en entier * --- | 1 | |
| A | FR-A-2 388 264 (COMMISSARIAT A L'ENERGIE ATOMIQUE) 17 Novembre 1978 * le document en entier * --- | 1 | |
| A | EP-A-0 272 089 (ALCAN INTERNATIONAL LTD) 22 Juin 1988 * colonne 3, ligne 30 - ligne 42 * --- | 8 | |
| A | US-A-4 696 580 (TOSHINORI KAMEDA) 29 Septembre 1987 * abrégé * --- | 4,6 | **DOMAINES TECHNIQUES RECHERCHES (Int. Cl.5)** G01K H01B |
| A | BE-A-833 857 (GENERAL ELECTRIC CO) 16 Janvier 1976 * le document en entier * ----- | 1 | |

Le présent rapport a été établi pour toutes les revendications

| Lieu de la recherche | Date d'achèvement de la recherche | Examinateur |
|---|---|---|
| LA HAYE | 13 AOUT 1993 | RAMBOER P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)